# EUROPÄISCHE PATENTANMELDUNG

(11) **EP 1 532 910 A2**
(43) Veröffentlichungstag der Anmeldung: **25.05.2005**
(21) Anmeldenummer: 04027572.9
(22) Anmeldetag: 19.11.2004
(51) Int. Cl.: A47J 45/06

(54) **Behälter zum Kochen von Speisen, mit Einrichtungen zum Überwachen der Betriebstemperatur**

(30) Priorität: 21.11.2003 IT MI20032266
(71) Anmelder: BALLARINI PAOLO & FIGLI S.p.A., 46017 Rivarolo Mantovano (MN) (IT)
(72) Erfinder: Dall' Asta, Massimo, 26041 Casalmaggiore (Cremona) (IT)
(74) Vertreter: Mayer, Hans Benno, Dipl.-Ing.

(57) **Zusammenfassung**

Behälter zum Kochen von Speisen, mit Einrichtungen zum Überwachen der Betriebstemperatur, wobei in der Halterung (3) für einen Griff (2) und/oder im Griff (2) des Behälters (1) Einrichtungen vorhanden sind, die zum Überwachen und zum Anzeigen einer vorbestimmten Betriebstemperatur des Behälters dienen.

## Beschreibung

Die vorstehende Erfindung betrifft einen Behälter zum Zubereiten von Speisen, mit Einrichtungen zum Überwachen der Betriebstemperatur.

Es ist aus dem Stand der Technik bekannt geworden, zum Kochen von Speisen unterschiedliche Kochfelder einzusetzen, z.B. Gasbrenner oder Wärmequellen, die über elektrischen Strom betrieben werden.

Für einige dieser Wärmequellen ist es möglich, die gewünschte Temperatur einzustellen, wodurch vermieden wird, dass z.B. das in einem Behälter befindliche Wasser vollständig verdampft oder dass eine bestimmte Speise, z.B. ein Beefsteak, anbrennt.

Diese bekannten Wärmequellen haben aber den Nachteil, dass eine ständige Überwachung des Kochgefäßes, das die zu kochenden Speisen aufnimmt, erforderlich ist, da im Falle einer unzulänglichen Überwachung die Gefahr besteht, dass der Behälter z.B. in Form einer Kasserolle oder einer Pfanne zu stark überhitzt wird, mit der Folge, dass die enthaltenen Speisen zerstört werden oder eine Beschädigung des Behälters eintritt, dies gilt besonders für seine Antihaftbeschichtung. Ferner tritt eine Verkürzung der Lebensdauer des Kochgefäßes ein.

Es ist daher Aufgabe der vorstehenden Erfindung, die Nachteile des Standes der Technik zu vermeiden und ein neues Gefäß zum Kochen von Speisen vorzuschlagen, das mit Einrichtungen ausgerüstet ist, die dem Benutzer das Überschreiten einer festgelegten Grenztemperatur anzeigen.

Diese Aufgabe wird mit einem Behälter zum Kochen von Speisen erreicht, der mit Einrichtungen zum Überwachen der Betriebstemperatur ausgerüstet ist und sich dadurch kennzeichnet, dass in die Halterung und oder in den Griff des Behälters Einrichtungen eingesetzt sind, die zur Überwachung und zur Anzeige einer vorbestimmten Betriebstemperatur des Behälters dienen.

Weitere Merkmale der Erfindung können den nun folgenden Beschreibungen sowie den Unteransprüchen entnommen werden.

Der Erfindungsgegenstand wird nun genauer anhand eines Ausführungsbeispieles beschrieben und in den beigefügten Zeichnungen dargestellt. Es zeigen:
Figur 1 in einer Draufsicht Teil einer Pfanne mit dem dazugehörigen Griff und den eingebauten erfindungsgemäßen Einrichtungen;
Figur 2 zeigt ein Schaltbild zur Verwirklichung des Erfindungsgegenstandes.

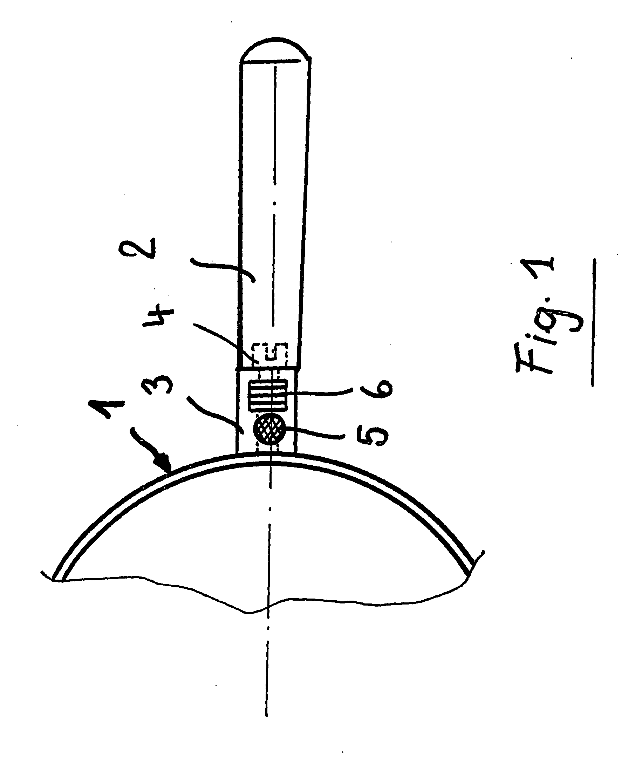

Wie der Figur 1 zu entnehmen ist, weist der Behälter 1, z.B. eine Pfanne, einen Griff 2 auf, der mit dem Behälter 1 über eine rohrförmige Lagerung 3 aus Metall verbunden ist. Die Lagerung 3 ist am Behälter 1 befestigt.

Der Stiel 2 ist mit dem Körper des Behälters 1, z.B. unter Verwendung einer Schraube 4, verbunden.

In die Halterung 3 oder auch in den Stiel 2 können in geeignete Ausnehmungen, die abgedichtet werden, Anzeige- und Überwachungseinrichtungen eingesetzt werden, z.B. eine Leuchtanzeige 5 und/oder eine akustische Anzeigevorrichtung 6.

Dank der Vorsehung einer Anzeigevorrichtung 5 in Form einer Leuchte 5, sowie einer akustischen Anzeigevorrichtung 6, wird es unter Zuhilfenahme von Teilen, die noch genauer im Folgenden beschrieben werden, ermöglicht dem Verwender visuell oder akustisch anzuzeigen, dass der Behälter eine überhöhte Temperatur erreicht hat, aufgrund fehlender Überwachung oder einer zu starken Erhitzung.

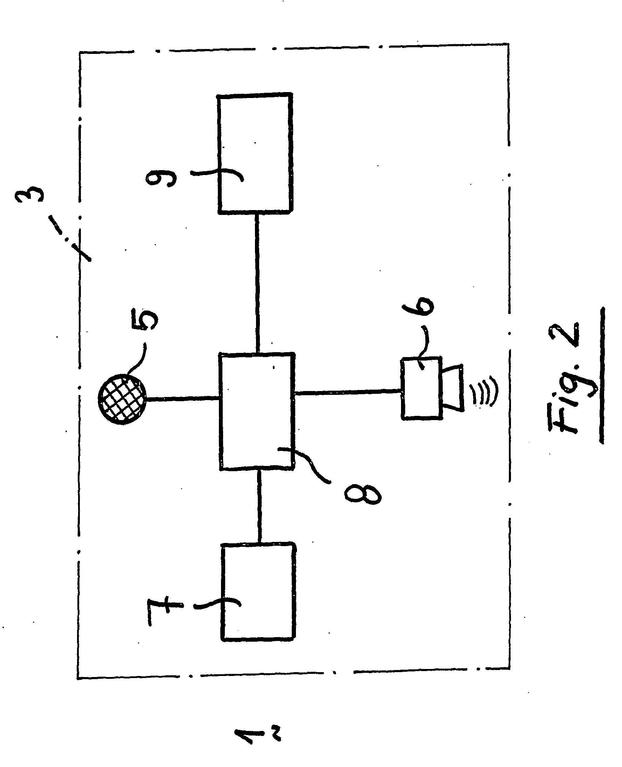

Wie der Figur 2 zu entnehmen ist, ist im Inneren der Aufnahme, welche die Anzeigeleuchte 5 und/oder die akustische Anzeigevorrichtung 6 aufnimmt, desweiteren ein Sensor 7 angeordnet, der zum Messen der Betriebstemperatur des Behälters 1 dient, und dieser Sensor 7 kann z.B. aus einem Thermostat bestehen, der elektronisch oder elektrisch betrieben wird.

Der Thermostat 7 ist mit einer Überwachungseinrichtung 8 verbunden, die z.B. einen Mikroprozessor aufnimmt, der die Aufgabe hat, das vom Thermostat 7 angelieferte Signal zu verstärken.

In vorteilhafter Weise beinhaltet der Mikroprozessor 8 in einem seiner Speicher ein Programm, welches die vom Sensor 7 zugeführte Temperatur mit einem vorgegebenen Nominalwert für das Gefäß 1 vergleicht, wobei dieser Nominalwert in einem Festspeicher abgespeichert ist.

Im Mikroprozessor 8 wird der notwendige elektrische Strom über eine Batterie 9 zugeführt, in vorteilhafter Weise eine photovoltaisch betriebene Mikrozelle, die über Lichtstrahlung aufladbar ist.

Im Mikroprozessor 8 wird ein Wert für eine hohe Temperatur abgespeichert, z.B. 200°C. Sobald das Kochgefäß 1 diese noch vertretbare Temperatur erreicht, wird über den Mikroprozessor 8 die Leuchte 5 der Überwachungseinrichtung angesteuert, wodurch ein Blinken oder ein Aufleuchten dieser Einrichtung erfolgt und dem Benutzer angezeigt wird, dass eine Temperatur erreicht wird, die gerade unterhalb des eingestellten Grenzwertes liegt.

Bei Überschreiten dieser Grenztemperatur, z.B. bei Erreichen einer Temperatur von 300°C, wird durch den Mikroprozessor eine Vorrichtung 6 aktiviert, die ein akustisches Signal abgibt und somit die Aufmerksamkeit des Benutzers als Notsituation oder Gefahrenquelle anzeigt.

Es ist naheliegend, dass die aufleuchtende Anzeigevorrichtung 5 und die akustische Anzeigevorrichtung 6 nicht unbedingt gemeinsam zum Einsatz gelangen müssen, es ist auch möglich eine dieser beiden Anzeigevorrichtungen alternativ zur anderen Vorrichtung zu verwenden.

Mit der im vorangegangen Text beschriebenen Neuerung wird es möglich unter Einsatz von außerordentlich kostengünstigen aber betriebssicheren Einrichtungen, die in ein abdichtbares Bauteil einsetzbar sind, und weder hitze- noch feuchtigkeitsabhängig sind, den Nachweis zu erbringen, dass das Kochgefäß 1 eine Temperatur erreicht hat, die eine Gefahrenquelle für die Speisen darstellt oder schädlich für das Kochgefäß sein könnte. Dies gilt sowohl für den Körper des Kochgefäßes, die Beschichtung, als auch für die Speisen, die im Inneren des Kochgefäßes angeordnet sind.

## Patentansprüche

1. Behälter zum Kochen von Speisen, mit Einrichtungen zum Überwachen der Betriebstemperatur, **dadurch gekennzeichnet, dass** in der Aufnahme (3) für einen Griff (2) und/oder im Griff (2) des Kochgefäßes (1) Einrichtungen (5, 6) vorgesehen sind, die zur Überwachung und zur Anzeige einer vorbestimmten Betriebstemperatur des Kochgefäßes (1) dienen.

2. Behälter, nach Patentanspruch 1, **dadurch gekennzeichnet, dass** die Überwachungs- und Anzeigeeinrichtungen eine Leuchte (5) aufweisen.

3. Behälter, nach Patentanspruch 1 , **dadurch gekennzeichnet, dass** die Überwachungs- und Anzeigeeinrichtungen eine akustische Anzeigevorrichtung (6) aufweisen.

4. Behälter, nach Patentanspruch 1, **dadurch gekennzeichnet, dass** die Überwachungs- und Anzeigeeinrichtungen (5, 6) einen Sensor (7) zur Erfassung einer Temperatur aufweisen und der Sensor mit einen Mikroprozessor (8) wirkverbunden ist, der wiederum mit einer elektrischen Batterie (9) verbunden ist.

5. Behälter, nach Patentanspruch 4, **dadurch gekennzeichnet, dass** die elektrische Batterie (9) aus einer wiederaufladbaren photovoltaischen Mikrozelle besteht.

6. Behälter, nach Patentanspruch 4, **dadurch gekennzeichnet, dass** der Mikroprozessor (8) einen Speicher aufweist, in dem Temperaturen abgespeichert werden, bei Erreichen derer die Anzeigeleuchte (5) und/oder die akustische Anzeigevorrichtung (6) betätigt werden.

7. Behälter, nach Patentanspruch 1, **dadurch gekennzeichnet, dass** der Sensor (7) zur Erkennung der Betriebstemperatur des Kochgefäßes (1) aus einem elektrisch oder elektronisch arbeitenden Thermostat besteht.

8. Behälter, nach Patentanspruch 7, **dadurch gekennzeichnet, dass** die Überwachungseinrichtung (8) einen Verstärker aufweist, um das vom Thermostat (7) angelieferte Signal zu verstärken.

9. Vorrichtung, nach Patentanspruch 1, **dadurch gekennzeichnet, dass** der Mikroprozessor (8) einen Speicher aufweist, der ein Programm zur Verarbeitung der vom Sensor (7) aufgezeigten Temperatur aufnimmt und dass diese Temperatur mit einem Nominalwert einer vorbestimmten Betriebstemperatur für das Kochgefäß (1), die in einem Festspeicher, enthalten ist, verglichen wird.

10. Behälter, nach Patentanspruch 1, **dadurch gekennzeichnet, dass** im Mikroprozessor (8) ein Wert für eine Temperatur, die einem ersten Grenzwert von 200°C entspricht abgespeichert wird, dass bei Erreichen dieser Temperatur die Anzeigeleuchte (5) betätigt wird und dass des weiteren eine zweite Grenztemperatur von ca. 300°C abgespeichert wird und bei Erreichen dieser Grenztemperatur die Vorrichtung (6) zur Abgabe eines akustischen Signales aktiviert wird.

11. Behälter, nach den Patentansprüchen 1 bis 8, **dadurch gekennzeichnet, dass** die Einrichtungen (5, 6, 7, 8, 9) in einem versiegelten Montagekörper untergebracht sind, der unempfindlich gegenüber der Betriebstemperatur des Kochgefäßes (1) und abgedichtet gegen Feuchtigkeit und Flüssigkeit eingebaut ist.
